# EUROPEAN PATENT APPLICATION

(11) **EP 3 705 460 A1**
(43) Date of publication of application: **09.09.2020**
(21) Application number: 18872320.9
(22) Date of filing: 29.10.2018
(51) Int. Cl.: C02F 1/68, A23L 3/015, B01J 3/00, G01N 24/08

(54) **ACTIVATED TREATED WATER, METHOD FOR MANUFACTURING ACTIVATED TREATED WATER, METHOD FOR MANUFACTURING ACTIVATED TREATED MEDIUM, DEVICE FOR MANUFACTURING ACTIVATED TREATED WATER, METHOD FOR PRESERVING FOOD PRODUCT, AND ACTIVATED TREATED MEDIUM**

(30) Priority: 30.10.2017 JP 2017208842
(71) Applicant: FIG Co., Ltd., Tokyo 105-6027 (JP); Tecratos Co., Ltd., Yokohama-shi, Kanagawa 227-0036 (JP); Pro Buono Co., Ltd., Tokyo 100-0004 (JP); Sugihara, Sunao, Yokohama-shi, Kanagawa 236-0046 (JP)
(72) Inventor: SUGIHARA, Sunao, Yokohama-shi Kanagawa 236-0046 (JP); KIMURA, Kenji, Yokohama-shi Kanagawa 227-0036 (JP)
(74) Representative: Sticht, Andreas
(86) International application number: PCT/JP2018/040189
(87) International publication number: WO 2019/088046

(57) **Abstract**

The purpose of the present invention is to provide activated treated water that can be manufactured by an extremely simple method and with which activation treatment can be performed on water that has not undergone activation treatment without direct contact. Provided is activated treated water that is clustered water that has undergone activation treatment and thereby formed small molecule groups, wherein the ratio FID/FID₀ of the free induction decay (FID) (units being seconds) of a peak originating in the hydrogen atoms in the water molecules in the hydrogen nuclear magnetic resonance spectrum for the activated treated water and the free induction decay FID₀ (units being seconds) of a peak originating in the hydrogen atoms in the water molecules in the hydrogen nuclear magnetic resonance spectrum for water that has not undergone activation treatment is 0.80 or less.

## Description

### TECHNICAL FIELD

The present invention relates to activated treated water preferable to be use for preserving a food product, or the like, a method for manufacturing activated treated water, a method for manufacturing an activated treated medium, a device for manufacturing activated treated water, a method for preserving a food product, and an activated treated medium.

### BACKGROUND ART

In general, 5 or more molecules of water form a cluster (cluster) by a hydrogen bond. Then, it is known that the proliferation of a microbe can be suppressed by water in which the cluster (cluster) of the water molecules is formed into small molecule groups.

For example, in Patent Document 1, a method for manufacturing activated treated water including a step of allowing water that is pressurized to a predetermined atmospheric pressure to pass in contact with a predetermined inorganic substance is disclosed. According to Patent Document 1, it is checked that water that is manufactured by the step of allowing water to pass in contact with the predetermined inorganic substance has a proliferation suppressive action of a microbe.

In addition, in Patent Document 2, a contact reaction method in which activated treated water that is manufactured through a step of allowing water pressurized to a predetermined atmospheric pressure to pass in contact with a predetermined inorganic substance is pressurized to a predetermined pressure and passes in contact with a medium to be treated is disclosed. According to Patent Document 2, the activated treated water is pressurized to the predetermined pressure and passes in contact with the medium to be treated, and thus, the medium to be treated can be subjected to an activation treatment.

According to Patent Documents 1 and 2, it is considered that in the activated treated water including the step of allowing the water pressurized to the predetermined atmospheric pressure to pass in contact with the predetermined inorganic substance, a cluster (cluster) of water molecules are formed into small molecule groups by ions eluted from the inorganic substance.
Patent Document 1: Japanese Examined Patent Application Publication No. H4-74074
Patent Document 2: Japanese Unexamined Patent Application, Publication No. H7-328418

### DISCLOSURE OF THE INVENTION

### Problems to be Solved by the Invention

However, the activated treated water described in Patent Document 1 is manufactured by alternately repeating the step of allowing the water pressurized to the predetermined atmospheric pressure to pass in contact with the predetermined inorganic substance and a step of exposing the pressurized water, and thus, it takes time to manufacture the activated treated water. In addition, in order to manufacture the activated treated water described in Patent Document 1, it is necessary to use a large-scale device including a water permeation device and a circulation exposure device connected to the inorganic substance, as with a device described in Patent Document 1, such that the steps can be alternately repeated.

In addition, in the activated treated water including the step of allowing the water pressurized to the predetermined atmospheric pressure to pass in contact with the predetermined inorganic substance, it is necessary to allow the activated treated water to pass in contact with the medium to be treated, in order to perform the activation treatment with respect to the medium to be treated. It is preferable that the medium to be treated can be subjected to the activation treatment without direct contact with the activated treated water, from the viewpoint of simplification.

An object of the present invention is to provide activated treated water that can be manufactured by an extremely simple method and with which an activation treatment can be performed with respect to a medium to be treated without direct contact.

### Means for Solving the Problems

As a result of intensive studies of the present inventors for attaining the object described above, it has been found that activated treated water in which a cluster (cluster) of water molecules are formed into small molecule groups can be manufactured by applying a pressure to water without contact with an inorganic substance, and there is a cause-and-effect relationship between the size of the pressure to be applied to water and the cluster (cluster) of the water molecules of the activated treated water. Then, it has been found that the object described above can be attained in the case of activated treated water in which a free induction decay (FID) of a peak in hydrogen atoms in water molecules, which is calculated by a nuclear magnetic resonance spectrum, is adjusted as an index of the size of the cluster (cluster) of the water molecules in the activated treated water, and thus, the present invention has been completed.
(1) Activated treated water that is clustered water subjected to an activation treatment to be small molecule groups, in which FID/FID₀ that is a ratio of a free induction decay FID (units being seconds) of a peak originating in hydrogen atoms in water molecules in a hydrogen nuclear magnetic resonance spectrum for the activated treated water to a free induction decay FID₀ (units being seconds) of a peak originating in hydrogen atoms in water molecules in a hydrogen nuclear magnetic resonance spectrum for water that is not subjected to an activation treatment is 0.80 or less.
(2) The activated treated water according to (1), in which a content of impurities is 2.0 mass% or less.
(3) A method for manufacturing activated treated water, the method including: a pressurization step of applying a pressure of 20 MPa or more and 300 MPa or less to water that is not subjected to an activation treatment for 5 minutes or longer.
(4) The method for manufacturing activated treated water according to (3), in which in the pressurization step, a step of bringing water that is pressurized into contact with an inorganic substance is not provided.
(5) A method for manufacturing an activated treated medium using the activated treated water according to (1) or (2), the method including: an activation treatment step of disposing the activated treated water to be in contact with a medium to be treated or to be in non-contact with the vicinity of the medium to be treated, and of performing an activation treatment with respect to the medium to be treated to be an activated treated medium, in which a ratio FIDₘ/FIDₘ₀ of a free induction decay FIDₘ (units being seconds) originating in hydrogen atoms in water molecules in a hydrogen nuclear magnetic resonance spectrum for the activated treated medium to a free induction decay FIDₘ₀ (units being seconds) of a peak originating in hydrogen atoms in water molecules in a hydrogen nuclear magnetic resonance spectrum for a medium that is not subjected to an activation treatment is 0.90 or less.
(6) A method for manufacturing an activated treated medium using activated treated water that is manufactured by the method for manufacturing activated treated water according to (3) or (4), the method including: an activation treatment step of disposing the activated treated water to be in contact with a medium to be treated or to be in non-contact with the vicinity of the medium to be treated, and of performing an activation treatment with respect to the medium to be treated to be an activated treated medium, in which a ratio FIDₘ/FIDₘ₀ of a free induction decay FIDₘ (units being seconds) originating in hydrogen atoms in water molecules in a hydrogen nuclear magnetic resonance spectrum for the activated treated medium to a free induction decay FIDₘ₀ (units being seconds) of a peak originating in hydrogen atoms in water molecules in a hydrogen nuclear magnetic resonance spectrum for a medium that is not subjected to an activation treatment is 0.90 or less.
(7) A device for manufacturing activated treated water, the device including: a pressurization mechanism applying a pressure of 20 MPa or more and 300 MPa or less to water, in which a ratio FID/FID₀ of a free induction decay FID (units being seconds) of a peak originating in hydrogen atoms in water molecules in a hydrogen nuclear magnetic resonance spectrum for activated treated water to a free induction decay FID₀ (units being seconds) of a peak originating in hydrogen atoms in water molecules in hydrogen nuclear magnetic resonance spectrum for water that is not subjected to an activation treatment is 0.80 or less.
(8) A method for preserving a food product, in which the medium to be treated according to (5) or (6) is a container for a food product, and the container that is subjected to an activation treatment is used for preserving a food product, as the activated treated medium.
(9) An activated treated medium that is subjected to an activation treatment, in which a ratio FIDₘ/FIDₘ₀ of a free induction decay FIDₘ (units being seconds) originating in hydrogen atoms in water molecules in a hydrogen nuclear magnetic resonance spectrum for the activated treated medium to a free induction decay FIDₘ₀ (units being seconds) of a peak originating in hydrogen atoms in water molecules in a hydrogen nuclear magnetic resonance spectrum for a medium that is not subjected to an activation treatment is 0.90 or less.

### Effects of the Invention

The activated treated water of the present invention is activated treated water that can be manufactured by an extremely simple method and with which an activation treatment can be performed with respect to a medium to be treated without direct contact.

### BRIEF DESCRIPTION OF THE DRAWINGS

Fig. 1 is a schematic view of a free induction decay curve in activated treated water of the present invention, and is a diagram for obtaining a value of FID in the activated treated water of the present invention from the free induction decay curve.
Fig. 2 is a diagram schematically illustrating an example of a device that is capable of manufacturing the activated treated water of the present invention.
Fig. 3 is a transmission spectrum diagram illustrating results of a Fourier transformation infrared spectroscopy test (a FT-IR test) of activated treated water of Example 1.
Fig. 4 is a transmission spectrum diagram illustrating results of a Fourier transformation infrared spectroscopy test (a FT-IR test) of water that is not subjected to an activation treatment (tap water).
Fig. 5 is a transmission spectrum diagram illustrating results of a Fourier transformation infrared spectroscopy test (a FT-IR test) of treated water of Comparative Example 2.
Fig. 6 is a diagram (a picture) illustrating growth of bean sprouts in Example 6 and Comparative Example 6 after being left to stand for 10 days.

### PREFERRED MODE FOR CARRYING OUT THE INVENTION

Hereinafter, a specific embodiment of the present invention will be described in detail, but the present invention is not limited to the following embodiment, and the present invention can be carried by applying suitable modifications within the scope of the object of the present invention.

### <Activated Treated Water>

Activated treated water of this embodiment indicates activated treated water that is clustered water subjected to an activation treatment to be small molecule groups. The clustered water is water that is not subjected to an activation treatment, and for example, indicates known normal water of the related art, such as tap water.

Then, in the activated treated water of this embodiment, FID/FID₀ that is a ratio of a free induction decay FID (units being seconds) of a peak originating in hydrogen atoms in water molecules in a hydrogen nuclear magnetic resonance spectrum (H¹-NMR) for activated treated water to a free induction decay FID₀ (units being seconds) of a peak originating in hydrogen atoms in water molecules in a hydrogen nuclear magnetic resonance spectrum for water that is not subjected to an activation treatment is 0.80 or less.

Note that, the water that is not subjected to the activation treatment is known normal water of the related art, and examples thereof are capable of including tap water and the like.

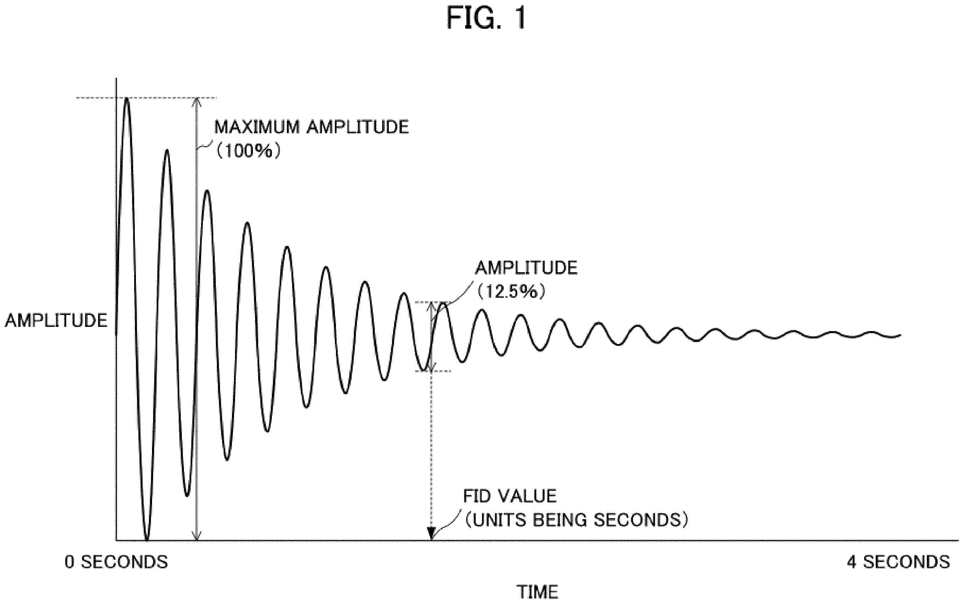

The free induction decay FID of the peak originating in the hydrogen atoms in the water molecules in the hydrogen nuclear magnetic resonance spectrum can be obtained by using a free induction decay curve. Specifically, as with a free induction decay curve illustrated in Fig. 1, a free induction decay curve that is a relationship diagram of an amplitude with respect to a time of 0 seconds to 4 seconds is obtained, which indicates a time (units being seconds) when the amplitude decays to 12.5% with respect to a maximum amplitude in the vicinity of 0 seconds. Water having a short time for decay to 12.5% indicates water that is less affected by a mutual interaction with other water molecules. That is, it is indicated that of a cluster (cluster) of water molecules is formed into small molecule groups as the free induction decay FID decreases.

Then, the free induction decay FID for the activated treated water of this embodiment indicates that the cluster (cluster) of the water molecules is formed into small molecule groups as the value decreases. For this reason, FID/FID₀ is an index indicating the size of the cluster (cluster) of the water molecules in water, and indicates water having less clusters (the clusters) of the water molecules as FID/FID₀ decreases, compared to water that is not subjected to an activation treatment.

Note that, FID/FID₀ is preferably 0.80 or less, and is more preferably 0.79 or less. In addition, a lower limit is not particularly limited, but the lower limit of FID/FID₀ is approximately 0.60 or more, in consideration of a limit in which the cluster (cluster) of the water molecules can be formed into small molecule groups.

In a case where FID/FID₀ is greater than 0.80, the cluster (cluster) of the water molecules in water is not sufficiently small, and thus, it is difficult to perform an activation treatment with respect to a medium to be treated, and in particular, it is difficult to perform the activation treatment with respect to the medium to be treated in a non-contact manner. For this reason, for example, even in the case of performing an activation treatment with respect to a container for a food product by using activated treated water as described below, a drip phenomenon of a food product is not sufficiently suppressed. In addition, even in the case of freezing, a decrease in a volume expansion rate is not sufficient. Note that, the details of the activation treatment of the medium to be treated will be described below.

In Patent Documents 1 and 2, the method for manufacturing activated treated water including the step of allowing the water that is pressurized to the predetermined atmospheric pressure to pass in contact with the predetermined inorganic substance is disclosed. However, in Patent Documents 1 and 2, it is considered that the cluster (cluster) of the water molecules is formed into small molecule groups by the ions eluted from the inorganic substance (Patent Document 2 [0012]), and the cause-and-effect relationship between the size of the pressure to be applied to water and the cluster (cluster) of the water molecules of the activated treated water is not considered. In addition, as described below, in activated treated water that is manufactured by the same method as that of Patent Documents 1 and 2, FID/FID₀ is 0.87 and is higher than that of the activated treated water of this embodiment. Accordingly, the activated treated water of this embodiment is novel activated treated water that is different from the water described in the patent documents described above.

The reason that the activated treated water in which the cluster (cluster) of the water molecules by applying a predetermined pressure is formed into small molecule groups can be manufactured is as follows.

In general, 5 or more molecules of water form a cluster (cluster) by a hydrogen bond. It is considered that the hydrogen bond forming the cluster (cluster) of the water molecules is cut by applying a predetermined pressure to water, and thus, the cluster (cluster) of the water molecules is formed into small molecule groups.

In addition, in the calculation of FID/FID₀ according to this embodiment, the hydrogen nuclear magnetic resonance spectrum for the activated treated water and the hydrogen nuclear magnetic resonance spectrum for the water that is not subjected to the activation treatment (for example, tap water or the like) are simultaneously measured by a nuclear magnetic resonance device. It is difficult to quantitatively measure the cluster (cluster) of the water molecules in water, the ratio (FID/FID₀) of FID of the activated treated water to FID₀ of the water that is not subjected to the activation treatment is set as the index of this embodiment.

In addition, the action of the activated treated water of this embodiment will be described. It is verified that in a case where the activated treated water of this embodiment is frozen, a volume expansion rate is low. A pressure of 20 MPa or more and 300 MPa or less was applied to water for 5 minutes or longer, and 300 ml of activated treated water having FID/FID₀ of 0.80 or less and 300 ml of water that was not subjected to an activation treatment (tap water) were respectively put in a beaker of 500 ml, and were subjected to a freezing test in a commercially available freezer.

As a result thereof, in the beaker in which the water that was not subjected to the activation treatment (the tap water) was put, the water that was not subjected to the activation treatment (the tap water) was frozen, and the volume expanded, and thus, the beaker was broken. On the other hand, in the beaker in which the activated treated water was put, even in a case where the activated treated water itself was frozen, the beaker was not broken. From the results of this test, it was verified that even in a case where the activated treated water of this embodiment was frozen, the volume expansion rate was low.

In the water that is not subjected to the activation treatment (the tap water), the cluster (cluster) of the water molecules is large, and a gap between the water molecules is large. For this reason, in the water that is not subjected to the activation treatment (the tap water), the air is incorporated between the water molecules, and thus, in a case where the water is cooled to a freezing point or lower, the water is frozen in a state where the water molecules are shoved to the outside by the air. As a result thereof, it is considered that in a case where the water that is not subjected to the activation treatment (the tap water) is frozen, the volume considerably expands.

On the other hand, in the activated treated water of this embodiment, the cluster (cluster) of the water molecules is formed into small molecule groups, and thus, a gap between the water molecules is small. For this reason, it is considered that even in a case where the water is frozen, the water molecules are not shoved to the outside by the air, and even in a case where the activated treated water of this embodiment is frozen, the volume expansion rate is low, and the volume does not considerably expand.

Note that, it is verified that as described in Patent Documents 1 and 2, in the treated water that is manufactured by alternately repeating the step of allowing water to which a pressure of approximately 20 atmospheres to 30 atmospheres (approximately 2 MPa to 3 MPa) is applied to pass in contact with the predetermined inorganic substance and the step of exposing the pressurized water, as described below, FID/FID₀ for water (Comparative Example 1) that is manufactured in the same condition as that of the water described in Patent Documents 1 and 2 is higher than that of the activated treated water of this embodiment. For this reason, it is assumed that in the activated treated water of this embodiment, the cluster (cluster) of the water molecules is further formed into small molecule groups, compared to the water that is manufactured in the same condition as that of the water described in Patent Documents 1 and 2. Therefore, it is assumed that the activated treated water of this embodiment is water having a volume expansion rate lower than that of the treated water that is manufactured in the same condition as that of the water described in Patent Documents 1 and 2.

In addition, it is preferable that the activated treated water of this embodiment does not contain impurities including an organic substance and/or an inorganic substance, to the maximum. As described below, this is because in a case where the activated treated water of this embodiment is used for preserving a food product, there is a concern that the food product is contaminated by the impurities, and thus, becomes insalubrious. In addition, this is because in a case where the activated treated water of this embodiment is used as a building material, there is a concern that the composition of the building material is changed by the impurities, and thus, the durability of the building material is affected.

The content of the impurities is preferably 2.0 mass% or less, is more preferably 1.0 mass% or less, is even more preferably 0.1 mass% or less, is still even more preferably 0.02 mass% or less, and is most preferably 0.01 mass% or less, in a total amount of the activated treated water.

In addition, the activated treated water of this embodiment can also be used as water for plant irrigation. In the activated treated water of this embodiment, the cluster (cluster) of the water molecules is formed into small molecule groups, and thus, water is easily absorbed from the root of a plant, compared to normal water, and easily flows into the entire plant through a vessel or the like in the plant, and thus, it is possible to accelerate the growth of the plant.

Note that, the fineness of the cluster (cluster) of the water molecules can also be measured by a relaxation time T2 of the peak originating in the hydrogen atoms in the water molecules in the hydrogen nuclear magnetic resonance spectrum. The relaxation time T2 of the peak is derived from a half bandwidth of H¹-NMR originating in the hydrogen atoms in the water molecules (an absorption width in a half position of an absorption height), and indicates motility as the water molecules in the activated treated water. That is, it is indicated that the cluster (cluster) of the water molecules is formed into small molecule groups as the relaxation time T2 increases.

Specifically, the relaxation time T2 can be calculated by T2 (units being seconds) = 1/πΔv from the half bandwidth (Δv) of the peak originating in the hydrogen atoms of water, in the hydrogen nuclear magnetic resonance spectrum.

Further, a transmission spectrum of an electromagnetic wave in a terahertz region (for example, 0.6 THz to 12 THz) is obtained from a Fourier transformation infrared spectroscopy test (FT-IR test), and is compared with the water that is not subjected to the activation treatment, and thus, the fineness of the cluster (cluster) of the water molecules can be determined.

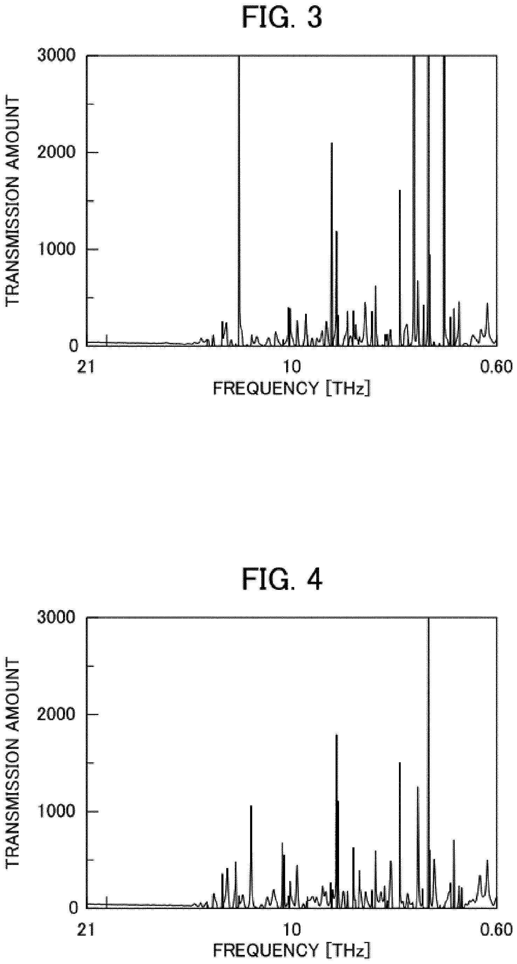

Water originally has properties of absorbing the electromagnetic wave in the terahertz region (for example, 0.6 THz to 12 THz) (refer to Fig. 4). This is because the electromagnetic wave of the terahertz region is absorbed by an oscillation motion of the entire cluster (cluster) of the water molecules. For this reason, in normal water that is not subjected to an activation treatment, in the case of obtaining the transmission spectrum of the electromagnetic wave in the terahertz region, the transmittivity of the electromagnetic wave is rarely exhibited (refer to Fig. 4).

However, in the activated treated water of this embodiment, clustered water is formed into small molecule groups. For this reason, the absorption of the electromagnetic wave due to the oscillation motion of the cluster (cluster) of the water molecules is partially suppressed, and thus, a part of the electromagnetic wave in the terahertz region is not absorbed, and a peak having transmittivity appears in a part of the spectrum (refer to Fig. 3).

Accordingly, the transmission spectrum of the electromagnetic wave in the terahertz region (for example, 0.6 THz to 12 THz) is obtained from the FT-IR test, and thus, the fineness of the cluster (cluster) of the water molecules can be determined.

For example, the fineness of the cluster (cluster) of the water molecules can be determined a method of comparing the water that is not subjected to the activation treatment with the number of peaks protruding from a predetermined intensity by the transmission spectrum of the electromagnetic wave in the terahertz region (for example, 0.6 THz to 12 THz), a method of integrating transmittances (transmission amounts) of the transmission spectrum of the electromagnetic wave in the terahertz region (for example, 0.6 THz to 12 THz) to be compared with each other, or the like.

Next, a method for manufacturing the activated treated water of this embodiment will be described.

### <Method for Manufacturing Activated Treated Water>

Examples of the method for manufacturing the activated treated water of the embodiment described above include a method for manufacturing activated treated water, including a pressurization step of applying a pressure of 20 MPa or more and 300 MPa or less to water for 5 minutes or longer. It is more preferable that the pressurization step is performed for 7 minutes or longer, and it is even more preferable that the pressurization step is performed for 10 minutes or longer.

Note that, in a case where the time for applying the pressure to the water is shorter than 5 minutes, the water is not capable of being sufficiently subjected to an activation treatment, and thus, the cluster (cluster) of the water molecules is not capable of being sufficiently formed into small molecule groups. In addition, even in a case where the pressurization is performed for longer than 15 minutes, the cluster (cluster) of the water molecules is not formed into small molecule groups, and thus, it is preferable that the pressurization is performed for 15 minutes or shorter, from the viewpoint of improving a manufacturing efficiency.

In a case where the pressure to be applied to the water is 20 MPa or more, the cluster (cluster) of the water molecules can be formed into small molecule groups, but the pressure is more preferably 50 MPa or more, and is even more preferably 100 MPa or more. The pressure to be applied to the water is 50 MPa or more, and thus, the cluster (cluster) of the water molecules can be sufficiently formed into small molecule groups. Note that, in a case where the pressure to be applied to the water is less than 50 MPa, there is a case where the cluster (cluster) of the water molecules is not capable of being sufficiently formed into small molecule groups, and thus, it is more preferable that the pressure to be applied to the water is 50 MPa or more. An upper limit of the pressure is not particularly limited, but in a case where the pressure is excessively large, it is necessary to improve a pressure capacity of a water bath (a container) or the like that applies a pressure to water, which may cause an increase in the cost of a device for manufacturing activated treated water described below. For this reason, the pressure to be applied to the water is preferably 300 MPa or less, is more preferably 250 MPa or less, and is even more preferably 200 MPa or less.

In addition, it is not necessary to bring the water that is pressurized in the pressurization step into contact with an inorganic substance. Accordingly, in the manufacturing of the activated treated water of this embodiment, it is not necessary to prepare a water permeation device in contact with the inorganic substance, and thus, it is possible to more simply manufacture the activated treated water.

According to the view of the present inventors, it is found that the cluster (cluster) of the water molecules is formed into small molecule groups by simply adding a pressure to water. In Patent Documents 1 and 2, the method for manufacturing activated treated water including the step of pressurizing water to the predetermined atmospheric pressure is disclosed. However, in any method for manufacturing activated treated water, pressurization is performed at a low pressure at the maximum of 15 atmospheres to 30 atmospheres (approximately 1.5 MPa to 3.0 MPa), compared to the method for manufacturing activated treated water of this embodiment. Further, the activated treated water is manufactured by alternately repeating the step of allowing the water that is pressurized to the predetermined atmospheric pressure to pass in contact with the predetermined inorganic substance and the step of exposing the pressurized water, and thus, it takes time to manufacture the activated treated water, and it is necessary to use a large-scale device.

In contrast, the activated treated water of this embodiment can be manufactured by an extremely simple method of applying a pressure of 20 MPa or more and 300 MPa or less to water for 5 minutes or longer. In addition, as described below, a device for attaining the manufacturing of the activated treated water of this embodiment may be a device having an extremely simple structure, such as a water bath including a compressed air supply source supplying compressed air, the manufacturing of the activated treated water is extremely simple, and it is not necessary to use a large-scale device as described in Patent Documents 1 and 2.

### <Activated Treated Medium>

The activated treated water of the embodiment described above is disposed to be in contact with the medium to be treated or to be in non-contact with the vicinity of the medium to be treated, and thus, it is possible to perform an activation treatment with respect to the medium to be treated. An activated treated medium is a medium that is capable of performing an activation treatment with respect to the other water or medium by being in contact with the other water or medium or by being disposed in the vicinity thereof.

The reason that the medium becomes the activated treated medium as described above by performing the activation treatment is not clear. However, in the activated treated water of this embodiment that satisfies FID/FID₀ of 0.80 or less, the cluster (cluster) of the water molecules is formed into small molecule groups, and the hydrogen bond of the water molecules is cut, and thus, the electromagnetic wave in the terahertz region is generated. It is assumed that the medium can be subjected to the activation treatment by the electromagnetic wave in the terahertz region. Then, the activated treated medium is a medium in which the electromagnetic wave in the terahertz region is also generated from the medium subjected to the activation treatment by the electromagnetic wave in the terahertz region.

The activated treated water of the embodiment described above is in contact with the medium to be treated, and thus, such an activation treatment can be performed. The activation treatment is performed by bringing the activated treated water of this embodiment into contact with the medium to be treated. Further, even in a case where the activated treated water of this embodiment is in non-contact with the medium to be treated, the activation treatment can be performed.

It is considered that the reason that the activated treated medium itself generates the electromagnetic wave in the terahertz region is because electrons rotating around the orbit of molecules configuring the medium to be treated are resonantly excited due to the irradiation of the electromagnetic wave in the terahertz region. A material used in the activated treated medium that is subjected to the activation treatment can be used in all materials having electrons (for example, also including the air or the like). For example, the material may be a container for a food product (a resin such as foamed polystyrene), a food product, a plant, paper (cellulose) such as a cardboard, a metal such as aluminum, a building component such as cement or asphalt, and the like. In addition, the material may be water that is not subjected to an activation treatment.

The activated treated medium, for example, is manufactured by a manufacturing method including an activation treatment step of disposing activated treated water to be in contact with a medium to be treated or to be in non-contact with the vicinity of the medium to be treated, and of performing an activation treatment with respect to the medium to be treated to be an activated treated medium. Disposing the activated treated water to be in non-contact with the vicinity of the medium to be treated indicates that a medium to be subjected to an activation treatment (for example, a container for a food product) as a medium D to be treated is placed in the vicinity of (for example, 0 cm or more and 10 cm or less, and preferably 0 cm or more and 5 cm or less) of the activated treated water that is manufactured, for example, for 24 hours or longer, and thus, the medium to be treated can be subjected to an activation treatment.

FIDₘ/FIDₘ₀ that is a ratio of a free induction decay FIDₘ (units being seconds) of a peak originating in hydrogen atoms in water molecules in a hydrogen nuclear magnetic resonance spectrum for the activated treated medium that is subjected to the activation treatment, a free induction decay FIDₘ₀ (units being seconds) of a peak originating in hydrogen atoms in water molecules in a hydrogen nuclear magnetic resonance spectrum for a medium that is not subjected to an activation treatment is 0.90 or less. Note that, FIDₘ/FIDₘ₀ is preferably 0.88 or less, and is more preferably 0.86 or less. In addition, a lower limit is not particularly limited, but the lower limit of the FIDₘ/FIDₘ₀ is approximately 0.70 or more, in consideration of a limit in which the cluster (cluster) of the water molecules can be formed into small molecule groups.

FIDₘ for the activated treated medium is measured as follows. FIDₘ for the activated treated medium can be obtained by measuring a hydrogen nuclear magnetic resonance spectrum with respect to water after 1 g of the activated treated medium is immersed in 7 g to 10 g of water that is not subjected to an activation treatment (for example, tap water) for 3 hours to 5 hours. Note that, the free induction decay can be calculated from the hydrogen nuclear magnetic resonance spectrum by the same method as described above.

Note that, a relationship between the activated treated medium and the water that is not subjected to the activation treatment is adjusted to be 300,000 or more, and preferably 900,000 or more, with respect to one atom configuring the activated treated medium.

In Patent Document 2, the contact reaction method in which the activated treated water that is pressurized to the predetermined atmospheric pressure is pressurized to the predetermined pressure and passes in contact with the medium to be treated is described. However, the activated treated water of this embodiment is capable of activating the medium to be treated without being in contact with the medium to be treated.

The reason that the medium to be treated can be activated by using the activated treated water of this embodiment, without bringing the activated treated water into contact with the medium to be treated is considered as follows. The air itself is also subjected to the activation treatment by the electromagnetic wave in the terahertz region that is generated from the activated treated water itself, and thus, the air itself is activated. Then, the medium to be treated is also subjected to the activation treatment by the electromagnetic wave in the terahertz region that is generated from the activated air itself.

A usage example of the activated treated medium that is subjected to the activation treatment will be described. For example, a container for a food product that is formed of a resin such as foamed polystyrene, for example, is subjected to an activation treatment by using the method described above. The container for a food product that is subjected to the activation treatment is capable of activating a food product that is placed in the container for a food product. Note that, the container for a food product that is subjected to the activation treatment is capable of activating the medium to be treated without being in contact with the medium to be treated as described above, and thus, is capable of performing the activation treatment with respect to not only a portion in which the container and the food product are in contact with each other, but also the entire food product.

Here, in general, the food product is configured of cells containing the moisture, but in a case where the food product is frozen, and the moisture contained in the cells of the food product is frozen, the cells are destroyed by the expansion of the volume of the moisture, and in a case where the food product is defrosted, the moisture in the cells leaks, and thus, a so-called drip phenomenon occurs.

However, in a case where the moisture contained in the cells of the food product that is subjected to the activation treatment is frozen, a volume expansion rate is low as described above. For this reason, even in a case where the food product is frozen, and the moisture contained in the cells of the food product is frozen, the cells are not destroyed by the expansion of the volume of the moisture, the occurrence of the drip phenomenon is maximally suppressed. The occurrence of the drip phenomenon is suppressed, and thus, the freshness of the food product can be maintained, and the taste is not degraded. Further, it is preferable since it is not necessary to provide a drip plate for absorbing the moisture such as blood generated by the drip phenomenon in the container for a food product, from the viewpoint of productivity. Note that, the food product may be an animal-based food product such as meat or fish, or may be a plant-based food product such as vegetables or fruits.

In addition, the present invention is not limited to the container for a food product in which the food product is directly placed, but can be preferably used in a wrapping film covering the food product, a cardboard for transporting the food product, paper, and the like.

The activated treated medium that is subjected to the activation treatment can be used in a building component such as concrete or a heat insulating material, as another usage example. The building component is subjected to the activation treatment, and thus, the durability of the building component can be improved, and a crack can be prevented.

In addition, in addition to the suppression of the drip phenomenon described above, the degree of freshness of a plant-based food product such as vegetables or fruits can also be improved. The plant-based food product performs respiration (aerobic respiration) in which a sugar content stored in the food product is decomposed by using oxygen in the atmosphere even after the food product is harvested. Then, the sugar content is decomposed and the degree of freshness of the food product decreases.

Therefore, for example, a packing bag covering the plant-based food product is subjected to an activation treatment by using the method described above. The packing bag that is subjected to the activation treatment is capable of activating the plant-based food product therein. Then, a decomposition rate of the sugar content in the activated food product decreases, and thus, the degree of freshness of the plant-based food product is improved.

The reason that the decomposition rate of the sugar content in the activated food product decreases is not clear, but it is considered that the plant-based food product is activated, and thus, electrons of molecules (cellulose, water, or the like) configuring the food product are resonantly excited and exhibit reducing properties, and therefore, the decomposition of the sugar content is suppressed.

Further, for example, a plant seed is subjected to an activation treatment by using the method described above, and thus, the growth of the plant can be accelerated. In addition, as described above, the activated treated water is used as water for plant irrigation, and thus, the growth of the plant can be accelerated, but the plant seed itself is subjected to the activation treatment, and thus, water (water for irrigation) itself that is absorbed by the plant seed is also subjected to the activation treatment, and therefore, water easily flows into the entire plant, and the growth of the plant can also be accelerated.

### <Device>

The activated treated water of the embodiment described above can be manufactured by a device including a pressurization mechanism that is capable of applying a pressure of 20 MPa or more and 300 MPa or less to water.

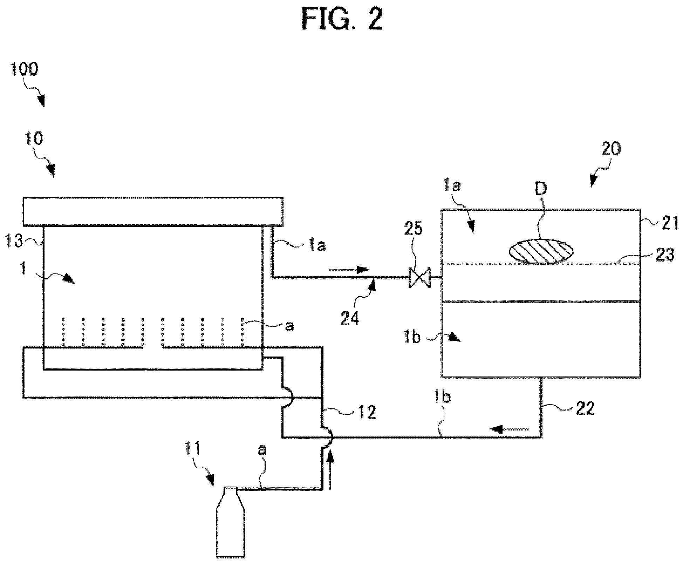

Fig. 2 is a diagram schematically illustrating an example of a device for manufacturing activated treated water that manufactures activated treated water and a device for manufacturing an activated treated medium that manufactured an activated treated medium. As illustrated in Fig. 2, a device 100 includes a device 10 for manufacturing activated treated water and a device 20 for manufacturing an activated treated medium.

The device 10 for manufacturing activated treated water includes a compressed air supply source 11, an air supply pipe 12, a water bath 13, and the like, as a pressurization mechanism. The compressed air supply source 11 is a compressed pump that sends out compressed air to be supplied to the water bath 13. The air supply pipe 12 is a pipe that supplies the compressed air supply the compressed air sent out from the compressed air supply source 11 to the water bath 13. The water bath 13 is a container that is capable of storing water in a sealed state.

In the device 10 for manufacturing activated treated water, the water bath 13 is filled with water in a sealed state. The water in the water bath 13 is pumped out by compressed air a from the compressed air supply source 11 through the air supply pipe 12. Then, a pressure is applied to the water in the water bath 13 of activated treated water by the pressure of the compressed air a. The water bath 13 is in a sealed state, and thus, the pressure is applied to the entire water in the water bath 13, in accordance with Pascal's principle.

The compressed air a of the compressed air supply source 11 is adjusted such that a pressure of 20 MPa or more and 300 MPa or less can be applied to water. The pressure described above is applied to the water in the water bath 13 for 5 minutes or longer, and thus, activated treated water 1 is manufactured in the water bath 13. Note that, the activated treated water 1, for example, is vaporized by being heated with a heat source (not illustrated) such as a heater, in the water bath 13.

Next, the device for manufacturing an activated treated medium will be described. The device 20 for manufacturing an activated treated medium includes a work bath 21 in which activated treated water (vapor) 1a is pumped out from the device 10 for manufacturing activated treated water through the activated treated water supply pipe 24. The work bath 21 includes a work base 23 on which the medium D to be treated can be placed, and is a container filled with the activated treated water (vapor) 1b. Note that, in the work bath 21, activated treated water (liquid) 1b in which the activated treated water (vapor) 1a is liquefied is also contained.

The water circulation pipe 22 is a pipe for supplying again the activated treated water (liquid) 1b in the work bath 21 to the device 10 for manufacturing activated treated water. As described above, in the device, the activated treated water 1 is circulated between the device 10 for manufacturing activated treated water and the device 20 for manufacturing an activated treated medium.

The activated treated water that is manufactured in the water bath 13 of the activated treated water is gasified, and the activated treated water (vapor) 1a is supplied to the work bath 21 of the device 20 for manufacturing an activated treated medium through the activated treated water supply pipe 24. The medium D to be treated that is a target of an activation treatment, such as a food product or a medium, is placed on the work base 23. The work bath 21 is filled with the activated treated water (vapor) 1a, and thus, the activated treated water 1 is in contact with the medium D to be treated, and an activation treatment can be performed.

Note that, in the device illustrated in Fig. 2, the activated treated water (vapor) 1a is brought into contact with the medium D to be treated, and thus, the medium D to be treated is subjected to the activation treatment, but it is not necessary to bring the activated treated water (vapor) 1a into contact with the medium D to be treated, and the medium D to be treated can be activated insofar as the medium D to be treated is disposed in the vicinity of the activated treated water 1. For example, the activated treated water may be stored under the work base 23 in the work bath 21, and the medium D to be treated placed on the work base 23 that is separated at a predetermined distance may be subjected to an activation treatment. In this case, a facility for vaporizing the activated treated water that is manufactured can be omitted from the device 10 for manufacturing activated treated water, and thus, it is possible to more simply manufacture the activated treated water.

Note that, the activated treated water (vapor) 1a in the work bath 21 is liquefied in the work bath 21 to be the activated treated water (liquid) 1b. The activated treated water (liquid) 1b is supplied again to the water bath 13 of the activated treated water through the water circulation pipe 22.

### EXAMPLES

Hereinafter, the present invention will be described in more detail by examples, but the present invention is not limited thereto.

### <H¹-NMR Measurement of Activated Treated Water>

In tap water, activated treated water (Examples 1 and 2) that was manufactured by applying a pressure of 20 MPa or more and 300 MPa or less to water for 5 minutes or longer, and treated water (Comparative Examples 1 and 2) in which a pressure of less than 20 MPa was applied to water, each of a relaxation time T2 and a free induction decay FID of a peak originating in hydrogen atoms were simultaneously measured from a hydrogen nuclear magnetic resonance spectrum. Note that, in the hydrogen nuclear magnetic resonance spectrum, the free induction decay FID of the peak originating in the hydrogen atoms of water was calculated from a time (units being seconds) when the amplitude decayed to 12.5% with respect to a maximum amplitude in the vicinity of 0 seconds (in Table 1, the free induction decays FID for each of the activated treated water and the treated water were indicated as "FID", and a ratio of the free induction decays FID for each of the activated treated water and the treated water with respect to a free induction decay FID₀ for water that was not subjected to an activation treatment was indicated as "FID/FID₀"). In the hydrogen nuclear magnetic resonance spectrum, T2 was calculated by an expression of T2 = 1/πΔv from the half bandwidth (Δv)of the peak originating in the hydrogen atoms of the water (in Table 1, the relaxation time was indicated as "T2"). Measurement results thereof are shown in Table 1.

In Table 1, the activated treated water of Examples 1 and 2 is activated treated water after being treated by applying a pressure shown in Table 1 for a time shown in Table 1 by using the device illustrated in Fig. 2.

In Table 1, the treated water of Comparative Example 1 is treated water in which general tap water is pushed to a reverse osmosis membrane at a pressure of 0.6 MPa, and thus, impurities are removed.

In Table 1, the treated water of Comparative Example 2 is treated water that is manufactured by repeatedly passing in contact with calcium and magnesium that are an inorganic substance at 10 atmospheres (approximately 1 MPa) by using a device illustrated in Fig. 2 of Patent Document 1 and being exposed.

In Table 1, the water that is not subjected to the activation treatment is general tap water.

**[Table 1]**

| | Pressure | Time | FID | FID/FID₀ | T2 (Seconds) |
|---|---|---|---|---|---|
| Comparative Example 1 | 0.6MPa | 10 Minutes | 0.359 | 0.91 | 0.213 |
| Comparative Example 2 | 10 Atmospheres (Approximately 1 MPa) | 5 Hours | 0.340 | 0.87 | 0.203 |
| Example 1 | 100MPa | 10 Minutes | 0.308 | 0.78 | 0.228 |
| Example 2 | 147MPa | 10 Minutes | 0.302 | 0.77 | 0.230 |
| Water that is not subjected to activation treatment | None | None | 0.393 | 1 | 0.199 |

Note that, in Table 1, "Pressure" indicates a pressure that is applied at the time of manufacturing the activated treated water and the treated water. In Table 1, "Time" indicates a time during which the pressure is applied at the time of manufacturing the activated treated water and the treated water.

From Table 1, it is found that in the activated treated water of Examples 1 and 2 that is manufactured by applying a pressure of 20 MPa or more and 300 MPa or less to water for 5 minutes or longer, FID/FID₀ is 0.80 or less. Accordingly, it is found that in the activated treated water of Examples 1 and 2, a cluster (cluster) of water molecules is further formed into small molecule groups, compared to the tap water or the treated water in which the pressure of less than 20 MPa is applied (Comparative Examples 1 and 2).

In addition, in the comparison of the relaxation time T2, the activated treated water of the examples has a value greater than that of the tap water or the treated water in which the pressure of less than 20 MPa is applied (Comparative Examples 1 and 2). From this test result, it is also found that in the activated treated water of the examples, the cluster (cluster) of the water molecules is further formed into small molecule groups, compared to the tap water or the treated water of each of the comparative examples.

### <H¹-NMR Measurement of Activated Treated Medium>

In a treated medium and a medium to be treated that was not subjected to an activation treatment, a free induction decay FIDₘ of a peak originating in hydrogen atoms was measured from a hydrogen nuclear magnetic resonance spectrum. Measurement results are shown in Table 2. The free induction decay FIDₘ with respect to each of the media was calculated by measuring a hydrogen nuclear magnetic resonance spectrum for water after 1 g of the medium to be treated (a foamed polystyrene container for a food product) was immersed in 7 g to 10 g of tap water for 3 hours to 5 hours.

In Table 2, in an activated treated medium of Example 3, 300 g of a medium to be treated (a foamed polystyrene container for a food product) was placed on a work base for 3 hours, as the medium to be treated in the device and was subjected to an activation treatment was performed by using the device illustrated in Fig. 2. Note that, the activated treated water used in the activation treatment is activated treated water in which a pressure shown in Table 2 is applied for a time shown in Table 2 (the activated treated water of Example 1). On the other hand, in Table 2, a treated medium of Comparative Example 3 is a treated medium (a foamed polystyrene container for a food product) in which 300 g of a medium to be treated (a foamed polystyrene container for a food product) is infiltrated in 1 liter of the treated water of Comparative Example 2 prepared as described above (a treatment pressure of 10 atmospheres (approximately 1 MPa) and a treatment pressure time of 5 hours) for 5 hours, and thus, is subjected to an activation treatment.

**[Table 2]**

| | Pressure | Time | FIDₘ | FIDₘ/FIDₘ₀ | T2 (Seconds) |
|---|---|---|---|---|---|
| Comparative Example 3 | 10 Atmospheres (Approximately 1 MPa) | 5 Hours | 0.524 | 1.025 | 0.248 |
| Example 3 | 100 MPa | 10 Minutes | 0.435 | 0.851 | 0.254 |
| Medium that is not subjected to activation treatment | None | None | 0.511 | 1 | 0.236 |

In Table 2, "Pressure" indicates a pressure that is applied at the time of manufacturing the activated treated water or the treated water used at the time of manufacturing each of the media. In Table 2, "Time" indicates a time during which the pressure is applied at the time of manufacturing the activated treated water of Example 3 and the treated water of Comparative Example 3 used at the time of manufacturing each of the media.

From Table 2, it is found that it is possible to manufacture an activated treated medium having FIDₘ/FIDₘ₀ of 0.90 or less, by the activated treated water that is manufactured by applying a pressure of 20 MPa or more and 300 MPa or less to water for 5 minutes or longer.

In addition, in the comparison of the relaxation time T2, the activated treated medium of Example 3 has a value greater than that of the treated medium of Comparative Example 3. From this test result, it is found that the activated treated medium of Example 3 is subjected to an activation treatment.

Note that, FIDₘ/FIDₘ₀ of the treated medium of Comparative Example 3 is approximately 1 (1.025), and T2 of the treated medium of Comparative Example 3 is shorter than T2 of the activated treated medium of Example 3. From this test result, it is found that the treated medium of Comparative Example 3 is not subjected to an activation treatment at all or is rarely subjected to the activation treatment. For this reason, it is found that in the treated water of Comparative Example 2 (a treatment pressure of 10 atmospheres (approximately 1 MPa) and a treatment pressure time of 5 hours), a capacity of performing an activation treatment with respect to a medium is not provided or the capacity is low, compared to the activated treated water of Example 1.

### <FT-IR Test>

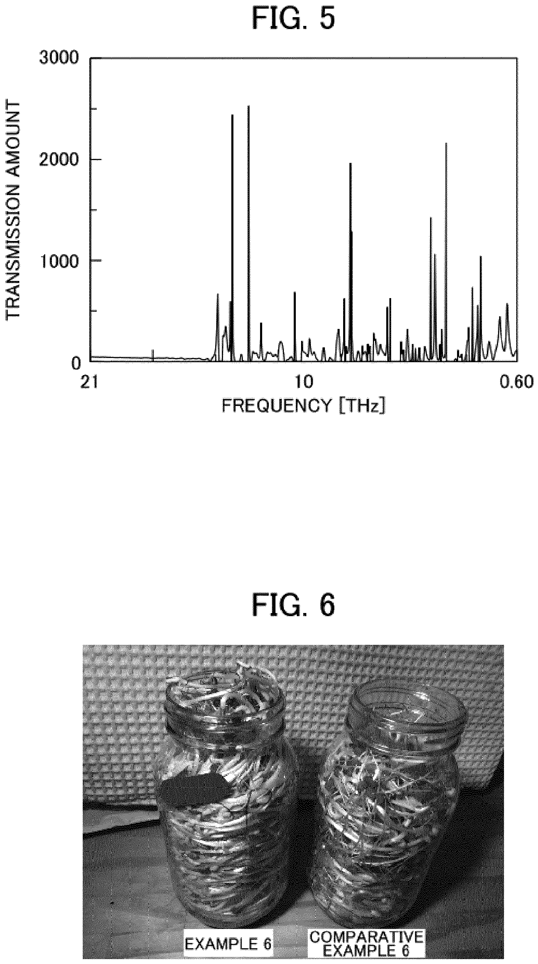

The activated treated water of Example 1, the treated water of Comparative Example 2, and the water that was not subjected to the activation treatment were subjected to a Fourier transformation infrared spectroscopy test (a FT-IR test). Specifically, the transmittance thereof was measured by applying an electromagnetic wave of 0.6 THz to 12 THz. Test results are illustrated in Fig. 3 to Fig. 5. A horizontal axis in Figs. 3 to 5 represents the frequency of the electromagnetic wave, and a vertical axis in Figs. 3 to 5 represents a transmission amount. A numerical value on the vertical axis of a spectrum in Figs. 3 to 5 indicates a transmission amount when a maximum value of a spectrum transmission amount in Fig. 3 is set to 3000. Fig. 3 is a spectrum diagram (a transmission spectrum) illustrating the results of the Fourier transformation infrared spectroscopy test (the FT-IR test) of the activated treated water of Example 1. Fig. 4 is a spectrum diagram (a transmission spectrum) illustrating the results of the Fourier transformation infrared spectroscopy test (the FT-IR test) of the water that is not subjected to the activation treatment (the tap water). Fig. 5 is a spectrum diagram (a transmission spectrum) illustrating the results of the Fourier transformation infrared spectroscopy test (the FT-IR test) of the treated water of Comparative Example 2.

As illustrated in Fig. 3 to Fig. 5, the activated treated water of Example 1 has more protruding spectrum lines (peaks), compared to the treated water of Comparative Example 2 and the water that is not subjected to the activation treatment. It is assumed that in a case where the cluster (cluster) of the water molecules is formed into small molecules, light particles are easily transmitted, and thus, the protruding spectrum line increases. From this test result, it is found that in the activated treated water of Example 1, the cluster (cluster) of the water molecules is further formed into small molecule groups, compared to the treated water of Comparative Example 2 and the water that is not subjected to the activation treatment.

### <Test of Imparting Physical Properties of Activated Treated Water>

A test of imparting physical properties of the activated treated water that was manufactured by applying a pressure of 20 MPa or more and 300 MPa or less to water for 5 minutes or longer was performed. Specifically, the activated treated water of Example 1 was put to a test tube to be installed, and two test tubes to which tap water was put as a medium to be treated were installed at a distance of each of 4 cm and 8 cm from the position of the test tube to which the activated treated water was put, and thus, a total of four samples were respectively installed.

After the installation for 24 hours, a hydrogen nuclear magnetic resonance spectrum for the water of each of the samples and tap water that was not installed was measured, and the relaxation time T2 of the peak originating in the hydrogen atoms in the water molecules was obtained. In the hydrogen nuclear magnetic resonance spectrum, the relaxation time (T2) was calculated by the expression of T2 = 1/πΔv from the half bandwidth (Δv)of the peak originating in the hydrogen atoms of the water (in Table 1, the relaxation time was indicated as "Relaxation Time (T2)"). Measurement results are shown in Table 3.

**[Table 3]**

| | Distance from activated treated water (cm) | Relaxation time(T2) (Seconds) |
|---|---|---|
| Activated treated water of Example 1 | 0 | 0.3916 |
| Sample 1 | 4 | 0.3595 |
| Sample 2 | 4 | 0.3593 |
| Sample 3 | 8 | 0.3200 |
| Sample 4 | 8 | 0.3100 |
| Tap water that is not installed | - | 0.3036 |

From Table 3, it is found that in each of the samples of the tap water disposed at a predetermined distance from the position of the activated treated water of Example 1, the relaxation time T2 increases, and thus, the cluster (cluster) of the water molecules is formed into small molecule groups even in a non-contact manner, compared to the tap water that is not installed. In addition, in samples 1 and 2 installed closer (4 cm) from the activated treated water of Example 1, the relaxation time T2 increases, compared to samples 3 and 4 installed comparatively far (8 cm) from the activated treated water of Example 1.

From this result, it is found that water can be subjected to an activation treatment by being installed in the vicinity of the activated treated water without being in contact with the activated treated water. In addition, it is found that the relaxation time T2 further increases as the installation position is closer from the activated treated water, and the cluster (cluster) of the water molecules is further formed into small molecule groups.

From this result, it was checked that even in a case where the activated treated water of the present invention is in non-contact with the medium to be treated (the tap water), it was possible to perform an activation treatment. This is assumed that the air itself is also subjected to the activation treatment by the electromagnetic wave in the terahertz region that is generated from the activated treated water itself, and the water that is the medium to be treated is also subjected to the activation treatment by the electromagnetic wave in the terahertz region that is generated from the air itself subjected to the activation treatment.

Note that, the test is not performed by using the treated water of Comparative Examples 1 and 2 in which FID/FID₀ is greater than 0.80, but it is checked that in the treated water of Comparative Example 2, it is not possible to perform the activation treatment even in a case where the medium is in contact with the treated water, from the test described above, and thus, it is assumed that even in a case where the medium to be treated (the tap water) is in non-contact with the treated water, similarly, it is not possible to perform the activation treatment with respect to the medium to be treated (the tap water).

### <Food Product Preserving Test 1>

A food product preserving test was performed by using the activated treated medium of the Example 3 described above. Specifically, a food product (fish) was placed in the activated treated medium of Example 3 (the foamed polystyrene container for a food product) that was activated as described above and the medium (the foamed polystyrene container for a food product) that was not activated, and was cryogenically preserved for 4 days.

As a result thereof, in the food product (fish) placed in the medium (the foamed polystyrene container for a food product) that was not activated, blood flowed out, and a drip phenomenon occurred, whereas in the food product (fish) placed in the activated treated medium (the foamed polystyrene container for a food product) that was activated, the drip phenomenon did not occur.

From this test result, it is found that it is possible to suppress the drip phenomenon of the food product (fish) by using the activated treated medium that is subjected to the activation treatment.

Note that, the food product preserving test is not performed by using the treated medium of Comparative Example 3 described above. However, FID/FID₀ of the treated medium in Comparative Example 3 is higher than FID/FID₀ of the activated treated medium in Example 3, and is approximately 1 (1.025). For this reason, it is assumed that in the treated medium of Comparative Example 3, a capacity of performing an activation treatment with respect to a food product is not provided or the capacity is extremely low. Accordingly, it is assumed that in the activated treated medium of Example 3, the drip phenomenon can be further suppressed, compared to the treated medium of Comparative Example 3.

### <Food Product Preserving Test 2>

A medium to be treated (a packing bag) was subjected to an activation treatment in the same condition as that of the activated treated medium of Example 3 described above, and thus, two activated treated media in the shape of a packing bag were manufactured.

Then, 150 g of a cabbage cut into shreds was put in one activated treated medium in the shape of a packing bag and the medium was sealed (Example 4), and 75 g of a lettuce cut into shreds was put in the other activated treated medium in the shape of a packing bag and the medium was sealed (Example 5).

Note that, as a comparative example, 150 g of a cabbage cut into shreds was put in a packing bag that was not subjected to an activation treatment and the bag was sealed (Comparative Example 4), and 75 g of a lettuce cut into shreds was put in a packing bag that was not subjected to an activation treatment and the bag was sealed (Comparative Example 5).

Then, an oxygen concentration in the activated treated medium in the shape of a packing bag was measured for each predetermined time. Measurement results are shown in Table 4.

**[Table 4]**

| | Food product | Elapsed time(Hours) | | | | | | | |
|---|---|---|---|---|---|---|---|---|---|
| | | 0 | 20 | 25 | 45 | 70 | 90 | 120 | 125 |
| Comparative Example 4 | Cabbage | 20.90 | 16.25 | 13.65 | 9.95 | 8.50 | 5.75 | 5.30 | 4.50 |
| Comparative Example 5 | Lettuce | 20.90 | 14.50 | 12.20 | 7.30 | 4.05 | 1.50 | 0.65 | 0.00 |
| Example 4 | Cabbage | 20.90 | 16.50 | 14.45 | 11.25 | 9.35 | 8.95 | 7.85 | 7.95 |
| Example 5 | Lettuce | 20.90 | 16.80 | 15.10 | 11.15 | 7.85 | 5.95 | 3.95 | 3.40 |

From Table 4, it is found that in the oxygen concentration in the activated treated medium of Example 4 and Example 5, an oxygen consumption rate is slow, compared to the oxygen concentration in the packing bag of Comparative Example 4 and Comparative Example 5. That is, it is considered that the activated treated medium of Example 4 and Example 5 is subjected to the activation treatment, and thus, a plant-based food product (the cabbage and the lettuce) that is put in the activated treated medium is activated, and a decomposition rate of a sugar content decreases. Accordingly, it is assumed that in the activated treated medium of Example 4 and Example 5, the degree of freshness of a food product (a plant-based food product) that is put in the activated treated medium is improved.

### <Plant Growth Test>

The cultivation of a plant seed (bean sprouts) was checked by using the activated treated water. Specifically, in a glass bottle in which 30 g of beans for bean sprouts were put, the activated treated water of Example 1 in the amount for immersing all beans was injected and was left to stand for 12 hours. After that, the activated treated water was removed, and thus, an activated treated medium of Example 6 (beans that were subjected to an activation treatment) was manufactured.

On the other hand, in a glass bottle in which 30 g of beans for bean sprouts were put, normal water (tap water) in the amount for immersing all beans was injected and was left to stand for 12 hours. After that, the water was removed, and thus, a medium of Comparative Example 6 (beans) was manufactured.

Then, each of the glass bottles in which the activated treated medium of Example 6 (the beans that were subjected to the activation treatment) and the medium of Comparative Example 6 (the beans) were put was left to stand for 10 days under an environment of approximately 15°C, in a dark place (a cardboard box). Fig. 6 illustrates the growth of the bean sprouts in Example 6 and Comparative Example 6 after being left to stand for 10 days.

From Fig. 6, in the activated treated medium of Example 6 that was subjected to the activation treatment (the beans that were subjected to the activation treatment), the mass of the beans before the growth was the same (30 g), but the volume of the grown sprouts was large, compared to the medium of Comparative Example 6 (the beans) that was not subjected to the activation treatment. Accordingly, it was checked that the growth of the activated treated medium of Example 6 (the beans that were subjected to the activation treatment) was further accelerated.

### EXPLANATION OF REFERENCE NUMERALS

- 1: ACTIVATED TREATED WATER
- 1a: ACTIVATED TREATED WATER (VAPOR)
- 1b: ACTIVATED TREATED WATER (LIQUID)
- 10: DEVICE FOR MANUFACTURING ACTIVATED TREATED WATER
- 11: COMPRESSED AIR SUPPLY SOURCE
- 12: AIR SUPPLY PIPE
- 13: WATER BATH
- a: COMPRESSED AIR
- 20: DEVICE FOR MANUFACTURING ACTIVATED TREATED MEDIUM
- 21: WORK BATH
- 22: WATER CIRCULATION PIPE
- 23: WORK BASE
- 24: ACTIVATED TREATED WATER SUPPLY PIPE
- 25: VALVE
- D: MEDIUM TO BE TREATED
- 100: DEVICE

## Claims

1. Activated treated water that is clustered water subjected to an activation treatment to be small molecule groups,
wherein FID/FID₀ that is a ratio of a free induction decay FID (units being seconds) of a peak originating in hydrogen atoms in water molecules in a hydrogen nuclear magnetic resonance spectrum for the activated treated water to a free induction decay FID₀ (units being seconds) of a peak originating in hydrogen atoms in water molecules in a hydrogen nuclear magnetic resonance spectrum for water that is not subjected to an activation treatment is 0.80 or less.

2. The activated treated water according to claim 1,
wherein a content of impurities is 2.0 mass% or less.

3. A method for manufacturing activated treated water, the method comprising:
a pressurization step of applying a pressure of 20 MPa or more and 300 MPa or less to water that is not subjected to an activation treatment for 5 minutes or longer.

4. The method for manufacturing activated treated water according to claim 3,
wherein in the pressurization step, a step of bringing water that is pressurized into contact with an inorganic substance is not provided.

5. A method for manufacturing an activated treated medium using the activated treated water according to claim 1 or 2, the method comprising:
an activation treatment step of disposing the activated treated water to be in contact with a medium to be treated or to be in non-contact with the vicinity of the medium to be treated, and of performing an activation treatment with respect to the medium to be treated to be an activated treated medium,
wherein a ratio FIDₘ/FIDₘ₀ of a free induction decay FIDₘ (units being seconds) originating in hydrogen atoms in water molecules in a hydrogen nuclear magnetic resonance spectrum for the activated treated medium to a free induction decay FIDₘ₀ (units being seconds) of a peak originating in hydrogen atoms in water molecules in a hydrogen nuclear magnetic resonance spectrum for a medium that is not subjected to an activation treatment is 0.90 or less.

6. A method for manufacturing an activated treated medium using activated treated water that is manufactured by the method for manufacturing activated treated water according to claim 3 or 4, the method comprising:
an activation treatment step of disposing the activated treated water to be in contact with a medium to be treated or to be in non-contact with the vicinity of the medium to be treated, and of performing an activation treatment with respect to the medium to be treated to be an activated treated medium,
wherein a ratio FIDₘ/FIDₘ₀ of a free induction decay FIDₘ (units being seconds) originating in hydrogen atoms in water molecules in a hydrogen nuclear magnetic resonance spectrum for the activated treated medium to a free induction decay FIDₘ₀ (units being seconds) of a peak originating in hydrogen atoms in water molecules in a hydrogen nuclear magnetic resonance spectrum for a medium that is not subjected to an activation treatment is 0.90 or less.

7. A device for manufacturing activated treated water, the device comprising:
a pressurization mechanism applying a pressure of 20 MPa or more and 300 MPa or less to water,
wherein a ratio FID/FID₀ of a free induction decay FID (units being seconds) of a peak originating in hydrogen atoms in water molecules in a hydrogen nuclear magnetic resonance spectrum for activated treated water to a free induction decay FID₀ (units being seconds) of a peak originating in hydrogen atoms in water molecules in a hydrogen nuclear magnetic resonance spectrum for water that is not subjected to an activation treatment is 0.80 or less.

8. A method for preserving a food product,
wherein the medium to be treated according to claim 5 or 6 is a container for a food product, and the container that is subjected to an activation treatment is used for preserving a food product, as the activated treated medium.

9. An activated treated medium that is subjected to an activation treatment,
wherein a ratio FIDₘ/FIDₘ₀ of a free induction decay FIDₘ (units being seconds) originating in hydrogen atoms in water molecules in a hydrogen nuclear magnetic resonance spectrum for the activated treated medium to a free induction decay FIDₘ₀ (units being seconds) of a peak originating in hydrogen atoms in water molecules in a hydrogen nuclear magnetic resonance spectrum for a medium that is not subjected to an activation treatment is 0.90 or less.
